# FASCICULE DE BREVET EUROPEEN

(11) **EP 1 853 039 B1**
(45) Date de publication et mention de la délivrance du brevet: **15.09.2010**
(21) Numéro de dépôt: 07107317.5
(22) Date de dépôt: 02.05.2007
(51) Int. Cl.: H04L 29/06

(54) **Équipements d'encapsulation IP et de modulation pour la transmission de paquets IP de données par synchronisation de méga-trames avec des méga-rafales**
IP Modulation und Verkapselungsausrüstung für die Übertragung der IP Datenpakete durch Synchronisierung der GroBramen miet GroB-Bursts
IP modulation and encapsulation equipment for the transmission of IP data packets by synchronization of mega-frames with mega-bursts

(30) Priorité: 05.05.2006 FR 0604087
(43) Date de publication de la demande: 07.11.2007
(73) Titulaire: Alcatel Lucent, 75008 Paris (FR)
(72) Inventeur: Roullet, Laurent, 31500, TOULOUSE (FR); Blineau, Joseph, 31321, PECHABOU (FR); Cohen, Michel, 75011, PARIS (FR)
(74) Mandataire: Ameline, Jean-Paul B.C.

(56) Documents cités:
- EP-A- 1 638 269
- WO-A-2006/031925

## Description

L'invention concerne le domaine de la transmission de données en mode TDMA, via un réseau de communication (éventuellement de diffusion et/ou satellitaire), en présence d'évanouissements de longue durée.

On entend ici par « données » aussi bien les données de voix que les données multimédia agencées sous la forme d'ensembles de données d'un même type qui constituent chacun ce que l'homme de l'art appelle en anglais ADU (pour « Application Data Unit» - unité de données d'application). Les données multimédia sont par exemple des fichiers de données (ou « data » en anglais) ou de vidéos (éventuellement sous forme de programmes de télévision). Par exemple, un ensemble de données d'un fichier de données constitue un segment de ce fichier, et un ensemble de données d'une vidéo constitue une trame de type 1, B ou P, d'une couche principale (ou de base) ou d'une couche d'augmentation (ou « enhanced layer » en anglais), d'une image de cette vidéo.

Par ailleurs, on entend ici par « réseau de communication », tout type de réseau capable de transmettre des données en mode TDMA (multiplexage temporel), et éventuellement en mode de diffusion (ou « broadcast »). Il pourra donc s'agir d'un réseau radio terrestre, d'un réseau satellitaire ou d'un réseau hybride, c'est-à-dire à la fois satellitaire et terrestre. L'invention est notamment adaptée aux réseaux capables de diffuser des données, comme par exemple les réseaux SDMB (pour « Satellite Digital Multimedia Broadcast »), les réseaux UMTS aptes à la diffusion (par exemple de type MBMS (pour « Multimedia Broadcast / Multicast Services »)), éventuellement satellitaire (S-UMTS), les réseaux DVB-H (pour « Digital Video Broadcasting - Handhelds » - télévision mobile)), éventuellement adaptés aux liaisons satellitaires, et les réseaux DVB-RCS (pour « Digital Video Broadcasting - Return Channel System » - Internet satellitaire)). Il pourra également s'agir de réseaux IP/TDMA comme par exemple WiMax ou WiFi ou de réseaux terrestres implémentant des technologies issues de technologies satellite, comme par exemple DVB-S, DVB-S2, DVB-RCS, voire même la diffusion de télévision fixe.

Comme le sait l'homme de l'art, pour transmettre (et notamment diffuser) des données par voie d'ondes vers des terminaux (de communication) mobiles, il est intéressant d'utiliser une forme d'onde dérivée de l'OFDM (« Orthogonal Frequency Division Multiplexing »). Cela provient du fait qu'elle offre à la fois une diversité fréquentielle et une diversité temporelle.

La diversité fréquentielle résulte de l'utilisation d'un grand nombre de porteuses (quasi-)orthogonales entre elles sur la largeur de bande du canal radio fréquence utilisé (au lieu d'une seule porteuse dans le cas du TDM). Cela offre une grande résistante contre l'affaiblissement fréquentiel (ou « fading fréquentiel ») qui est caractéristique des réseaux mobiles. En effet, lorsque l'on perd quelques porteuses, les autres ne sont généralement pas abîmées, ce qui permet, à l'aide de codes correcteurs d'erreurs adaptés, de récupérer les erreurs.

La diversité temporelle résulte de l'utilisation d'un mécanisme à temps de garde dans la forme d'onde et dans les terminaux afin d'éviter les interférences induites par les trajets multiples, qu'ils proviennent du même émetteur ou d'émetteurs différents dans un réseau monofréquence (ou SFN). En cas de mobilité les réponses temporelles et fréquentielles du canal varient rapidement, si bien que pour améliorer la réception dans ces conditions, on utilise un mécanisme de code correcteur d'erreur puissant et on effectue généralement un entrelacement temporel qui permet de disperser les erreurs au-delà de la durée d'un symbole. Cette durée d'entrelacement temporel correspond en général à quelques milliers de symboles pour l'environnement d'un piéton et à quelques centaines de symboles pour l'environnement d'un véhicule (comme par exemple une voiture). Elle est donc comprise entre environ 0,2 ms et 10 ms.

Si la diversité temporelle permet de lutter contre les évanouissements dus aux trajets multiples, elle ne permet pas en revanche de lutter contre un autre type d'évanouissement que constitue la perte de communication lorsqu'un terminal est hors de vue du lien satellite, par exemple dans une zone rurale dépourvue de répéteur. Dans ce cas, seule importe la communication « en vue directe » et tout obstacle, comme par exemple un mur de bâtiment, un arbre ou un pont (lorsque l'on circule en voiture), provoque une interruption dont la durée peut être grande comparativement aux durées d'entrelacement présentées ci-avant. Ces durées d'interruption, qui dépendent de la vitesse du terminal mobile et de la topologie de son environnement, peuvent être comprises entre quelques centaines de millisecondes et quelques dizaines de secondes. Afin de limiter ces interruptions, il est certes possible d'augmenter la puissance du signal (par exemple pour traverser les arbres), mais cela est très onéreux. En outre, certaines interruptions, comme par exemple lors de la traversée d'un pont, ne peuvent pas être évitées.

Par ailleurs, lorsque la transmission se fait en mode diffusion conformément à un standard d'accès de type DVB-H, on réalise un tramage de type TDMA au-dessus de la couche radio afin de multiplexer des programmes de façon temporelle et d'éviter une utilisation trop importante de l'énergie stockée dans la batterie du terminal. La signalisation des rafales (ou « bursts » en anglais) DVB-H se fait au moyen de l'entête MPE (pour « MultiProtocol Encapsulation ») des paquets MPE qui servent de couche de convergence entre la couche IP (utilisée au niveau service) et la couche MPEG2 qui est utilisée au niveau transport (transport de paquets de taille fixe (188 octets). Il est rappelé que dans un entête MPE on code avec un pas de 10 ms la durée qui sépare un paquet MPE de la rafale courante du premier paquet MPE de la rafale suivante du même service. Ainsi, lorsqu'un terminal lit la rafale courante, il sait quand il doit éteindre son tuner de réception (la durée maximale de la rafale est connue et l'en-tête comporte un drapeau (ou « flag ») qui indique la fin de la rafale courante) et quand il doit le rallumer. Cela permet de faire des économies de batterie de plus de 70% avec une dizaine de canaux lorsque le terminal n'est intéressé que par un seul d'entre eux. En raison des limites des technologies qui sont mises en oeuvre, il faut actuellement de l'ordre de 100 ms pour « réveiller » un terminal, si bien que les rafales ne peuvent être ni trop brèves (puisque alors le temps de veille sera significativement moins long que le temps d'éveil, ce qui diminuera considérablement l'économie d'énergie), ni trop longues (puisque alors le temps de passage d'un canal de contenu à un autre, plus connu sous le mot anglais « zapping » et égal en moyenne à l'intervalle entre les rafales, lui même égal à la somme des durées des rafales composant la trame, sera trop important). Par conséquent, une rafale dure en général de 100 à 300 ms et l'intervalle séparant deux rafales est de l'ordre de 1 à 3 secondes.

Du fait de la situation décrite ci-avant, il est difficile d'arriver à protéger les services qui sont diffusés par satellite avec des délais d'évanouissements beaucoup plus importants que ceux rencontrés dans les réseaux terrestres, tout en respectant la problématique des services multimédia, à savoir des temps de zapping et d'entrée en service inférieurs à 1,5 secondes, et/ou la problématique des terminaux mobiles (ou portables) ayant une batterie de faible capacité.

Pour tenter d'obtenir une telle protection, il faut mettre en oeuvre des solutions d'entrelacement dont la durée est typiquement égale ou supérieure à celle d'une rafale DVB-H. Pour ce faire, il existe au moins trois solutions. Une première solution consiste à encoder les données, c'est-à-dire à leur appliquer une technique de correction d'erreurs de type FEC (« Forward Error Correction ») ou MPE-FEC, au niveau de la couche d'accès MAC (MPE/MPE-FEC). Dans ce cas, l'équipement d'encapsulation IP, qui reçoit des paquets IP d'un ou plusieurs serveurs de contenus, encode les données des paquets IP, au niveau de la couche d'accès (MAC), avant d'entrelacer leurs bits redondants (produits par l'encodage) dans des rafales successives (par exemple deux ou trois, selon le niveau de redondance choisi) elles mêmes composées de paquets (pouvant être différents des paquets IP, par exemple MPEG2 ou ATM). Puis, le modulateur, qui est alimenté en continu (même si les données du service particulier arrivent en rafale) par l'équipement d'encapsulation IP, encode les paquets (par exemple MPEG2 ou ATM) reçus en continu, mais cette fois au niveau de la couche radio, avant de les filtrer, de les amplifier et de les moduler dans des trames (ou « frames ») radio.

L'intérêt de cette première solution réside dans le fait qu'il n'y a aucun impact au niveau de la couche radio, mais seulement au niveau de la couche d'accès MAC. Cependant, cette première solution présente un inconvénient majeur du fait qu'elle impose que le terminal ait reçu toutes les trames radio contenant l'ensemble des rafales comportant les données encodées entrelacées (par exemple deux ou trois) avant de pouvoir procéder au décodage, ce qui est rédhibitoire au niveau service puisque l'on induit un temps d'attente d'une durée égale au produit de l'intervalle entre les rafales par la profondeur d'entrelacement (par exemple 2 ou 3). En outre, les performances sont moins bonnes qu'avec des techniques purement radio car la correction d'erreurs (ou encodage) est distribuée de façon indépendante entre les couches radio et d'accès.

Une deuxième solution consiste à n'utiliser l'équipement d'encapsulation IP que pour encapsuler les paquets IP qu'il reçoit dans des rafales de paquets (par exemple MPEG2 ou ATM) successives, puis à utiliser le modulateur pour encoder les rafales de paquets (par exemple MPEG2 ou ATM) reçus en continus au niveau de la couche radio sans se soucier de la coordination avec les rafales (par exemple de type DVB-H), avant d'entrelacer les bits redondants (produits par l'encodage) sur une profondeur de plusieurs trames (ou « frames », par exemple deux, trois ou quatre, selon le niveau de redondance (ou taux de codage) choisi), et avant de les filtrer, de les amplifier et de les moduler.

L'intérêt de cette deuxième solution réside dans le fait qu'il n'y a aucun impact au niveau de la couche d'accès MAC et que les performances sont meilleures puisque le codage est entièrement réalisé au niveau de la couche radio. Cependant, cette deuxième solution présente un inconvénient majeur du fait qu'elle impose que le terminal soit constamment à l'écoute des trames radio contenant les données encodées entrelacées transmises, ce qui nécessite d'importantes capacités de stockage de données et surtout interdit de mettre en oeuvre la technique d'économie de batterie (ou « power saving »).

Une troisième solution, variante de la deuxième, consiste de nouveau à n'utiliser l'équipement d'encapsulation IP que pour encapsuler les paquets IP qu'il reçoit dans des rafales de paquets (par exemple MPEG2 ou ATM) successives, puis à utiliser le modulateur pour encoder les rafales de paquets (par exemple MPEG2 ou ATM) reçus en continus, au niveau de la couche radio sans se soucier de la coordination avec les rafales (par exemple de type DVB-H), avant d'entrelacer les bits redondants (produits par l'encodage) dans des micro-trames (ou « micro-frames ») successives de durées beaucoup plus faibles (typiquement 20 ms au lieu de 200 ms), au niveau d'une espèce de sous-couche d'accès, et avant de les filtrer, de les amplifier et de les moduler.

L'intérêt de cette troisième solution réside, d'une première part, dans le fait qu'il n'y a aucun impact au niveau de la couche d'accès MAC et que les performances sont bien meilleures puisque le codage est entièrement fait au niveau de la couche radio, d'une deuxième part, qu'il y a moins de problème de stockage des données puisque le terminal ne doit stocker que les micro-trames qui l'intéressent, et d'une troisième part, que les temps d'accès aux services de diffusion sont très bons et les économies d'énergie sont bonnes. Cependant, cette troisième solution présente un inconvénient majeur du fait qu'elle impose la présence d'une sous-couche supplémentaire (intermédiaire entre les couches radio et d'accès) qui reste entièrement à définir et à développer, et dont les besoins en terme de performance sont aujourd'hui hors de portée. Ainsi, ni les équipements d'infrastructure existants ni les terminaux existants ne sont aujourd'hui en mesure de traiter ce type de sous couche d'accès.

Aucune solution connue n'apportant une entière satisfaction, l'invention a donc pour but d'améliorer la situation.

Elle propose à cet effet un équipement dédié à l'encapsulation de paquets IP de données devant être transmis en mode TDMA (multiplexage temporel) via un réseau de communication (RD), et comprenant des moyens d'encapsulation IP chargés d'encapsuler des paquets IP reçus, appartenant à un même flux, dans des « méga-rafales » (ou en anglais « mega-bursts ») de paquets (par exemple MPEG2 ou ATM) successives, présentant une première durée choisie et séparées temporellement d'une seconde durée choisie, et d'adjoindre à chaque méga-rafale des données d'information représentatives au moins de la première durée, de la seconde durée, d'un type d'encodage à appliquer et d'un type d'entrelacement à effectuer.

Les moyens d'encapsulation IP de cet équipement d'encapsulation IP peuvent être chargés d'adjoindre à chaque méga-rafale un entête d'information qui se présente sous la forme d'un paquet de type MIP (pour « Megaframe Information Packet ») dans lequel les données d'information sont intégrées dans des structures privées (ou « private structures »). Un tel entête d'information comprend donc au moins la première durée, la seconde durée, le type d'encodage à appliquer et le type d'entrelacement à effectuer.

En variante ou en complément, les moyens d'encapsulation IP de cet équipement d'encapsulation IP peuvent être chargés, chaque fois que le nombre des données qui constituent les paquets IP et les données d'information associées qui sont contenus dans une méga-rafale est inférieur au nombre maximal de données que peut contenir cette dernière, de compléter le contenu de la méga-rafale avec des données de bourrage non signifiantes de sorte que ce contenu soit constitué d'un nombre de données égal au nombre maximal.

L'invention propose également un équipement dédié à la modulation au sein d'un réseau de communication capable de transmettre en mode continu des données modulées pour une transmission radio, et comprenant des moyens de traitement chargés d'extraire de chaque méga-rafale (générée par un équipement d'encapsulation IP du type de celui présenté ci-avant) les données d'information qu'elle contient, et d'encoder, selon le type d'encodage défini par des données d'information précédemment extraites, les données contenues dans les paquets (par exemple MPEG2 ou ATM) qui encapsulent les paquets IP dans la méga-rafale correspondante, et d'entrelacer, selon le type d'entrelacement défini par les données d'information précédemment extraites, les données redondantes qui résultent de cet encodage dans des méga-trames radio successives présentant une première durée identique à celle définie par les données d'information précédemment extraites et séparées temporellement d'une seconde durée identique à celle définie par les données d'information précédemment extraites.

L'équipement de modulation selon l'invention peut comporter d'autres caractéristiques qui peuvent être prises séparément ou en combinaison, et notamment :
- ses moyens de traitement peuvent être chargés, lorsqu'ils ont reçu une méga-rafale, de déterminer ses dates d'arrivée et/ou de fin afin de déduire de ces dates et de la seconde durée, définie dans les dernières données d'information extraites, la date d'arrivée de la méga-rafale suivante. En fait on a besoin principalement du différentiel de temps entre la date d'arrivée de la méga-rafale courante et celle de la suivante, lequel différentiel est explicitement contenu dans les données d'information ;
- ses moyens de traitement peuvent être chargés, lorsqu'ils ont extrait de la méga-rafale courante des données d'information représentatives d'un nouveau type d'entrelacement correspondant à une profondeur d'entrelacement différente de celle définie par les précédentes données d'information extraites, d'appliquer ce nouveau type d'entrelacement aux données redondantes qui doivent être intégrées dans les méga-trames radio qui suivent la méga-trame radio courante qui correspond à la méga-rafale courante ;
- ses moyens de traitement peuvent être chargés, lorsqu'ils ont extrait de la méga-rafale courante des données d'information représentatives d'une nouvelle seconde durée inférieure à celle qui est définie par les précédentes données d'information extraites, d'utiliser cette nouvelle seconde durée pour les méga-trames radio qui seront générées après qu'aient été générées des méga-trames radio (y compris celle courante qui correspond à la méga-rafale courante) en nombre égal au nombre qui est défini par le type d'entrelacement défini par les précédentes données d'information extraites ;
- ses moyens de traitement peuvent être chargés, lorsqu'ils ont extrait de la méga-rafale courante des données d'information représentatives d'une nouvelle seconde durée supérieure à celle qui est définie par les précédentes données d'information extraites, d'utiliser cette nouvelle seconde durée pour les méga-trames radio qui seront générées après la méga-trame radio courante qui correspond à la méga-rafale courante ;
- ses moyens de traitement peuvent être chargés, lorsqu'ils ont extrait de la méga-rafale courante des données d'information représentatives d'une nouvelle première durée supérieure à celle qui est définie par les précédentes données d'information extraites, d'utiliser cette nouvelle première durée pour les méga-trames radio qui seront générées après la méga-trame radio courante qui correspond à la méga-rafale courante ;
- ses moyens de traitement peuvent être chargés, lorsqu'ils ont extrait de la méga-rafale courante des données d'information représentatives d'une nouvelle première durée inférieure à celle qui est définie par les précédentes données d'information extraites, d'utiliser cette nouvelle première durée pour les méga-trames radio qui seront générées après qu'aient été générées des méga-trames radio (y compris celle courante qui correspond à la méga-rafale courante) en nombre égal au nombre qui est défini par le type d'entrelacement défini par les précédentes données d'information extraites ;
- ses moyens de traitement peuvent être chargés d'intégrer dans certaines au moins des méga-trames certaines au moins des données d'information contenues dans les méga-rafales correspondantes reçues.

L'invention propose également un terminal de communication (éventuellement mobile ou portable) capable de se connecter à un réseau de communication (RD) propre à transmettre en mode continu des paquets (par exemple MPEG2 ou ATM) regroupant (ou encapsulant) des paquets IP organisés en mode TDMA dans des méga-trames radio générées par un équipement de modulation du type de celui présenté ci-avant, et comprenant des moyens de stockage de méga-trames radio, des moyens de désentrelacement, des moyens de décodage chargés de récupérer les paquets (par exemple MPEG2 ou ATM) et des moyens d'assemblage chargés, en cas de décodage correct au bout de la Nième méga-trame reçue (le nombre N de méga-trames dépendant des conditions de réception), d'assembler les paquets (par exemple MPEG2 ou ATM) en un paquet MPE transportant un paquet IP, utilisé par une application classique (par exemple multimédia), et une information de signalisation, contenue dans son entête MPE, qui est alors (classiquement) utilisée par des moyens de traitement de trame (par exemple DVB-H).

L'invention est particulièrement bien adaptée, bien que de façon non exclusive, aux réseaux de communication radio de type DVB-H opérant en mode TDMA (et en particulier leurs évolutions adaptées aux liaisons satellitaires). Mais, elle concerne également et non limitativement tout type de réseau de transmission (éventuellement adapté à la diffusion (« broadcast »)) opérant en mode TDMA, ainsi que des réseaux IP/TDMA comme par exemple WiMax ou WiFi.

D'autres caractéristiques et avantages de l'invention apparaîtront à l'examen de la description détaillée ci-après, et des dessins annexés, sur lesquels :
- la figure 1 illustre de façon très schématique et fonctionnelle un serveur de contenus alimentant en flux continus de paquets IP un équipement d'encapsulation IP selon l'invention, lui-même alimentant en méga-rafales, assemblées sous la forme d'un flux continu de paquets (par exemple MPEG2 ou ATM), un équipement de modulation selon l'invention alimentant en méga-trames radio, assemblées en un flux continu, un réseau de diffusion auquel sont connectés des terminaux de communication comportant un récepteur de contenus et un lecteur de contenus,
- la figure 2 illustre de façon très schématique et fonctionnelle un exemple d'encodage de données issues de méga-rafales et d'entrelacement des données encodées dans des méga-trames, selon l'invention,
- la figure 3 illustre de façon très schématique l'influence d'une augmentation de la profondeur d'entrelacement sur un exemple d'encodage de données issues de méga-rafales et d'entrelacement des données encodées dans des méga-trames,
- la figure 4 illustre de façon très schématique l'influence d'une diminution de la profondeur d'entrelacement sur un exemple d'encodage de données issues de méga-rafales et d'entrelacement des données encodées dans des méga-trames, dans le cas d'une première stratégie,
- la figure 5 illustre de façon très schématique l'influence d'une diminution de la profondeur d'entrelacement sur un exemple d'encodage de données issues de méga-rafales et d'entrelacement des données encodées dans des méga-trames, dans le cas d'une seconde stratégie,
- la figure 6 illustre de façon très schématique comment un terminal se comporte en cas d'augmentation de la durée des méga-trames,
- la figure 7 illustre de façon très schématique comment un terminal se comporte en cas d'augmentation de l'intervalle temporel entre deux méga-trames au niveau d'un terminal,
- la figure 8 illustre de façon très schématique un exemple de traitement de méga-trames par un terminal dans des conditions favorables, et
- la figure 9 illustre de façon très schématique un exemple de traitement de méga-trames par un terminal dans des conditions défavorables.

Les dessins annexés pourront non seulement servir à compléter l'invention, mais aussi contribuer à sa définition, le cas échéant.

L'invention a notamment pour objet de permettre l'amélioration de la réception par des terminaux de communication, éventuellement mobiles, de paquets IP transmis (éventuellement diffusés) par un réseau de communication (éventuellement satellitaire), en présence d'évanouissements de longue durée.

Dans ce qui suit, on considère à titre d'exemple non limitatif que le réseau de communication est un réseau satellitaire adapté à la diffusion de contenus (multimédia), comme par exemple un réseau constituant une évolution du DVB-H (télévision mobile) selon les standards DVB Forum. Mais, l'invention n'est pas limitée à ce type de réseau de communication. Elle concerne en effet tout réseau de communication radio dans lequel les terminaux de communication peuvent faire l'objet, en réception, d'évanouissements de longue durée ou d'environnements mobiles fortement perturbés (comme par exemple dans un train), et notamment les réseaux radio cellulaires (ou mobiles) purement terrestres, par exemple de type UMTS (éventuellement DVB-H ou MBMS), et les réseaux purement satellitaires, par exemple de type SDMB.

Par ailleurs, on considère dans ce qui suit que les terminaux de communication (destinataires des données ici diffusées par le réseau) sont des terminaux mobiles, comme par exemple des téléphones mobiles, équipés d'un récepteur de contenus multimédia opérant en mode TDMA et d'un lecteur de contenus multimédia. Mais l'invention n'est pas limitée à ce type de terminal de communication. Elle concerne en effet tout type de terminal mobile (ordinateur portable ou assistant numérique personnel (ou PDA) communicant, notamment) ou fixe (ordinateur ou serveur, notamment), équipé d'un récepteur de données opérant en mode TDMA et d'un éventuel lecteur de contenus multimédia, et tout type de récepteur de données (éventuellement sous forme de contenus multimédia) raccordable à un réseau de communication radio (éventuellement adapté à la diffusion) et destiné à alimenter en données transmises (éventuellement diffusées) un lecteur de données ou des moyens de stockage.

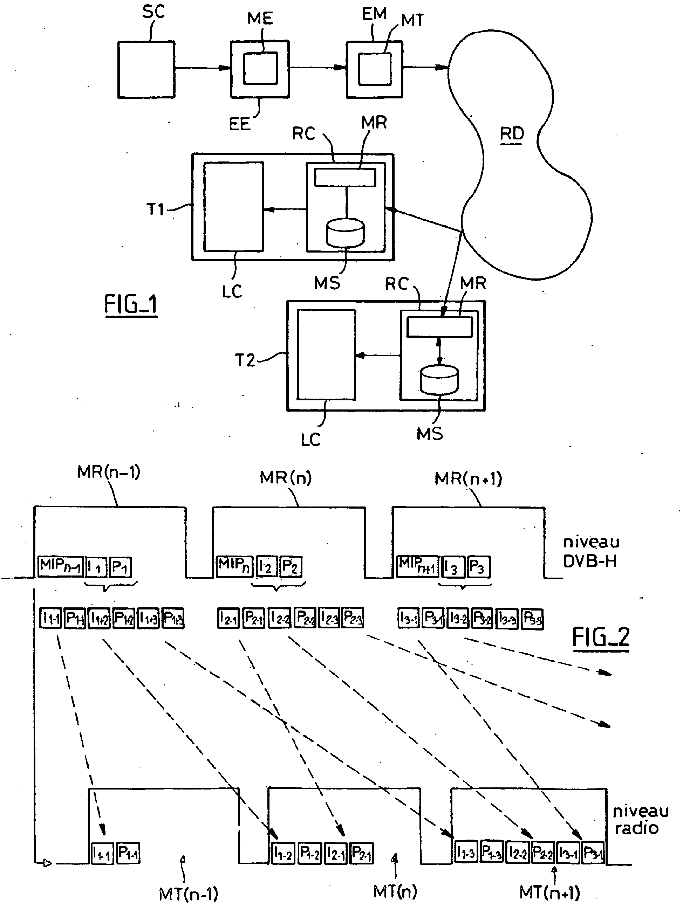

On a représenté sur la figure 1 une chaîne de transmission (ici de diffusion) de données (ici des contenus multimédia) entre un serveur de contenus multimédia SC et des téléphones mobiles, via un équipement d'encapsulation IP EE, un équipement de modulation (ou modulateur) EM et un réseau satellitaire de diffusion RD (ici de type DVB-H).

Il est tout d'abord rappelé qu'un serveur (de contenus multimédia) SC est chargé de transformer des contenus multimédia en ensembles de données, puis d'intégrer ces ensembles de données dans des paquets IP, afin de délivrer en sortie des flux continus de paquets IP destinés à un équipement d'encapsulation IP EE.

On considère dans ce qui suit, à titre d'exemple purement illustratif et non limitatif, que les ensembles de données constituent chacun une trame vidéo de type 1, B ou P, d'une couche principale (ou de base) ou d'une couche d'augmentation (ou « enhanced layer »), d'une image vidéo, ou bien un flux de type BIFS. Mais, l'invention n'est pas limitée à ce type d'ensemble de données multimédia. Elle concerne en effet, d'une part, les données classiques, par exemple de type voix, ainsi que les ensembles de données multimédia que l'homme de l'art appelle en anglais ADU (Application Data Unit - unité de données d'application).

L'équipement d'encapsulation IP EE comprend un module d'encapsulation ME chargé d'encapsuler les paquets IP reçus, qui appartiennent à un même flux, dans des méga-rafales (ou « mega-bursts ») de paquets (ici de type MPEG2, à titre d'exemple - paquets de taille fixe égale à 188 octets) successives, et conformément au mode de transmission qui est utilisé par le réseau de diffusion RD auquel il est connecté. Ce mode de transmission est ici TDMA (« Time Division Multiple Access » - multiplexage temporel).

On entend ici par «méga-rafale» un ensemble de rafales successives selon le standard ETSI EN 301192, c'est-à-dire un ensemble de paquets (ici MPEG2) consécutifs, regroupés dans une méga-trame définie par le standard ETSI 101191, c'est-à-dire un ensemble successif de paquets (ici MPEG2), ensemble dont le volume est de valeur connue, fixe et déterminée par le choix de modulation et comportant à une position à priori quelconque un paquet spécifique (ici MPEG), par exemple de type MIP.

Dans ce qui suit, afin de faciliter la compréhension, on considère que l'équipement d'encapsulation IP EE alimente l'équipement de modulation EM d'un flux continu de paquets MPEG2 agencés sous forme de méga-rafales, tandis que l'équipement de modulation EM délivre au réseau de diffusion des méga-trames. En d'autres termes, on réserve l'appellation de méga-trame pour ce qui est délivré par l'équipement de modulation EM.

A des fins de simplicité dans ce qui suit, on suppose qu'une méga-rafale ne comporte qu'une seule rafale (ici de type DVB-H) et que le paquet MIP se trouve en tête de cette rafale. Mais, l'invention n'est pas limité à cet exemple. En effet, une méga-rafale peut comporter plusieurs (au moins deux) rafales (ici DVB-H), et le paquet (MIP) qu'elle contient peut ne pas être placé en tête. Par ailleurs, afin d'adapter la taille de la méga-rafale à la taille réelle d'une méga-trame, on peut adjoindre à son contenu des paquets de bourrage (ou « padding »), par exemple de type MPEG2 NULL. Ces paquets de bourrage sont ensuite supprimés lors du passage de la méga-rafale dans l'équipement de modulation EM.

Les méga-rafales générées présentent une première durée choisie, qui peut être modifiée en fonction des besoins, et sont séparées temporellement les unes des autres par une seconde durée choisie, qui peut être également modifiée en fonction des besoins.

Selon l'invention, le module d'encapsulation ME adjoint aux paquets IP qu'il intègre dans chaque méga-rafale des données d'information qui représentent au moins la première durée, la seconde durée, le type d'encodage que l'équipement de modulation EM va devoir appliquer au niveau de la couche radio aux données des paquets (par exemple MPEG2) qui transportent (ou encapsulent) les paquets IP, et le type d'entrelacement que l'équipement de modulation EM va devoir effectuer sur les données encodées.

La première durée peut par exemple être définie par un début et une fin de méga-rafale. La seconde durée peut par exemple être définie par le délai d'attente de la méga-rafale suivante (par exemple en dizaines de millisecondes) ou la date prévue d'envoi de la prochaine méga-rafale (on peut en effet dériver de l'information « délai d'attente » qui est connue au niveau de l'équipement d'encapsulation IP EE une « date absolue d'envoi » qui peut être incluse dans le paquet MIP, et, grâce à une synchronisation par exemple de type GPS, l'équipement de modulation EM sait quand il doit envoyer la méga-trame correspondante). Le type d'encodage définit au moins le profil de la protection FEC. Le type d'entrelacement définit au moins la profondeur de l'entrelacement, c'est-à-dire le nombre de méga-trames dans lesquelles doivent être répartis les bits redondants résultant de l'encodage d'un bit de donnée des paquets (ici MPEG2) reçus et transportant des paquets IP reçus par l'équipement d'encapsulation EE, ainsi qu'éventuellement le caractère linéaire ou non linéaire (arrivée tardive) de l'entrelacement, c'est-à-dire si le nombre de bits redondants résultant de l'encodage d'un bit de donnée d'un paquet (ici MPEG2) reçu doit être constant dans chaque méga-trame ou bien variable d'une méga-trame à une méga-trame suivante.

Toutes les données d'information (première durée, seconde durée, type d'encodage et type d'entrelacement) sont par exemple intégrées par le module d'encapsulation IP ME dans un entête d'information se présentant sous la forme d'un paquet de type MIP (Megaframe Information Packet), et de préférence dans ce que l'on appelle des structures privées (ou « private structures »).

Comme indiqué précédemment, dans un mode de réalisation particulier, chaque fois qu'une méga-rafale n'est pas complètement remplie (c'est-à-dire lorsque le nombre des données des paquets IP et des données d'information associées est inférieur au nombre maximal de données que peut contenir la méga-rafale), le module d'encapsulation IP ME peut la compléter avec des paquets de bourrage non signifiants (ou padding) afin qu'elle soit remplie. L'équipement de modulation se charge ensuite d'éliminer les paquets de bourrage (redondants) consécutivement au traitement d'un paquet MIP. En fait, une méga-rafale créée par l'équipement d'encapsulation IP EE sert principalement de conteneur entre ledit équipement d'encapsulation IP EE et l'équipement de modulation EM.

La signalisation MIP permet un dialogue unidirectionnel entre l'équipement d'encapsulation IP EE (qui fabrique les méga-rafales, ici de type DVB-H) et l'équipement de modulation EM (qui doit créer le profil d'entrelacement radio respectueux de ces méga-rafales). L'utilisation de la norme MIP oblige l'équipement d'encapsulation IP EE à créer des méga-rafales à l'intérieur de frontières qui sont des multiples de méga-trames dont la taille est fixée par les choix de la modulation et du codage radio.

On notera que la profondeur d'entrelacement présente de préférence les caractéristiques suivantes :
- elle est un multiple de l'intervalle temporel entre les méga-rafales (ici DVB-H), c'est-à-dire la seconde durée qui est elle-même fonction du nombre de canaux simultanés et de la durée d'une méga-rafale de base (élémentaire),
- elle est supérieure ou égale à la durée d'évanouissement typique du canal visé, par exemple 10 secondes dans le cas d'une réception satellite rurale ou semi rurale.

Par ailleurs, il est rappelé que la profondeur d'entrelacement n'est pas forcément égale au taux de codage. Pour une profondeur d'entrelacement inférieure ou égale au taux de codage, on peut utiliser un entrelacement linéaire répartissant de façon homogène les bits redondants résultant de l'encodage entre les méga-trames successives (par exemple dans la figure 2, on utilise un taux de codage de 1/3 et une profondeur d'entrelacement égale à 3). On voit donc que sur la dernière méga-trame radio MT(n+1), on a assez de bits pour arriver à décoder la méga-trame (1/3), ce qui permet à un terminal Ti qui ne reçoit que cette méga-trame (« arrivée tardive ») de décoder les données, en cas de bonne réception.

Pour des profondeurs d'entrelacement supérieures au taux de codage, il n'est plus possible de conserver une répartition linéaire car il n'y a plus assez de bits disponibles dans la dernière méga-trame. Une répartition inhomogène des bits redondants est alors requise. Par exemple, en présence d'un taux de codage de 1/3 avec un profil «tôt/tardif » on répartit les bits redondants sur quatre méga-trames successives comportant significativement plus de bits sur les première et dernière méga-trames. Cela signifie qu'en cas de bonne qualité de réception un terminal Ti est capable de décoder dès la première méga-trame s'il démarre sur celle-ci, ou bien en sommant deux méga-trames du milieu si il débute avec la deuxième méga-trame, où seulement à la quatrième méga-trame si il débute avec la troisième ou quatrième méga-trame. Ce qui est important c'est qu'il peut décoder une méga-trame en arrivée tardive.

Compte tenu des contraintes pratiques de mise en oeuvre des codes qui ne sont généralement pas parfaits (par exemple les turbo codes ne sont que « presque parfaits »), il est préférable que la profondeur d'entrelacement pour un entrelacement linéaire ne dépasse pas le taux de codage - 1.

Les méga-rafales (TDMA) sont transmises par l'équipement d'encapsulation IP EE à l'équipement de modulation EM auquel il est généralement connecté par une connexion filaire.

Le module d'encapsulation ME de l'équipement d'encapsulation EE peut être réalisé sous la forme de modules logiciels (ou informatiques), de circuits électroniques, ou d'une combinaison de circuits et de logiciels.

L'équipement de modulation EM comprend un module de traitement MT chargé, tout d'abord, d'extraire de chaque méga-rafale, générée par l'équipement d'encapsulation IP EE, les données d'information qu'il contient. Par exemple, il détermine les dates d'arrivée et/ou de fin de réception de chaque méga-rafale afin de déduire la date d'arrivée de la méga-rafale suivante de ces dates d'arrivée et de fin de réception et de la seconde durée qui est définie dans les données d'information extraites d'une méga-rafale précédente.

On notera que la connaissance de la date d'arrivée de la méga-rafale courante n'est pas en général requise, on peut en effet déterminer la date d'arrivée de la méga-rafale suivante en ajoutant la durée de l'intervalle temporel (seconde durée) à la date de fin de la méga-rafale courante. A l'inverse, la connaissance de la date de fin de la méga-rafale courante n'est pas en général requise, on peut en effet déterminer la date d'arrivée de la méga-rafale suivante en ajoutant la durée de l'intervalle temporel (seconde durée) à la durée de la méga-rafale courante.

On notera que les données d'information sont utilisées par différents sous-modules du module de traitement MT, selon leur(s) fonction(s) respective(s). Le module de traitement MT est également chargé d'encoder les données qui constituent les paquets (ici MPEG2) présents dans chaque méga-rafale courante reçue en fonction du type d'encodage qui est défini par les données d'information extraites d'une méga-rafale précédente, soit celle qui précède immédiatement la méga-rafale courante (lorsqu'il est immédiatement applicable), soit d'une méga-rafale précédente plus ancienne (lorsqu'il n'est pas immédiatement applicable).

Par exemple, l'encodage peut être de type 1/3 ou ¼, ce qui signifie que l'encodeur va rajouter deux fois ou trois fois plus d'informations de redondance.

Une fois l'encodage des bits de données de la méga-rafale courante effectué, le module de traitement MT procède à l'entrelacement des bits redondants qui en résultent, en fonction du type d'entrelacement qui est défini par les données d'information extraites d'une méga-rafale précédente, soit celle qui précède immédiatement la méga-rafale courante (lorsqu'il est immédiatement applicable), soit d'une méga-rafale précédente plus ancienne (lorsqu'il n'est pas immédiatement applicable). Cet entrelacement se fait par intégration des bits redondants dans des méga-trames (ou « mega-frames ») radio successives.

Ces méga-trames radio présentent une première durée identique à celle qui est définie par les données d'information extraites d'une méga-rafale précédente et sont séparées temporellement les unes des autres d'une seconde durée qui est identique à celle qui est définie par les données d'information extraites de cette méga-rafale précédente.

En d'autres permes, les méga-trames radio sont synchronisées sur les méga-rafales (ici DVB-H). On réalise ainsi, d'une part, une protection FEC et un entrelacement au niveau de la couche radio, ce qui offre une performance plus optimale que si l'on opère au niveau de la couche d'accès, et d'autre part, une synchronisation de l'entrelacement radio avec la couche FEC, ce qui permet aux terminaux destinataires des méga-trames de mettre en oeuvre un mécanisme d'économie de l'énergie de la batterie (ou power saving) par lecture de l'entête MPE, et donc de façon équivalente à ce qu'ils font dans le cas de rafales DVB-H classiques (et donc avec peu d'impact sur les terminaux). De préférence, on utilise pour l'encodage un code correcteur d'erreur parfait ou quasi-parfait afin que les terminaux puissent utiliser toutes les données contenues dans les méga-trames pendant les phases où ils sont à l'écoute (« on »), de manière interchangeable.

Une fois que des bits redondants ont été intégrés dans une méga-trame, celle-ci est filtrée, amplifiée et modulée avant d'être communiquée au réseau de diffusion RD afin d'être transmise (diffusée) vers des terminaux de communication Ti (dans l'exemple illustré sur la figure 1, l'indice i est égal à 1 ou 2, mais il peut prendre n'importe quelle valeur non nulle).

On a représenté schématiquement sur la figure 2 un exemple d'encodage et d'entrelacement mis en oeuvre par un équipement de modulation EM selon l'invention. Plus précisément, trois méga-rafales successives MR(n-1), MR(n) et MR(n+1), générées par l'équipement d'encapsulation IP EE au niveau de la couche d'accès (ici DVB-H), et les trois méga-trames correspondantes MT(n-1), MT(n) et MT(n+1), générées par l'équipement de modulation EM au niveau de la couche radio, ont été représentées.

La première méga-rafale MR(n-1) comporte un paquet MIPₙ₋₁ (contenant des données d'information) et des trames vidéo référencées I₁ et P₁. Un encodage de type 1/3 de ces deux trames vidéo I₁ et P₁ produit deux triplets de bits redondants I₁₋₁, I₁₋₂, I₁₋₃, et P₁₋₁, P₁₋₂, P₁₋₃. La deuxième méga-rafale MR(n) comporte un paquet MIPₙ (contenant des données d'information) et des trames vidéo référencées I₂ et P₂. L'encodage de type 1/3 de ces deux trames vidéo I₂ et P₂ produit deux triplets de bits redondants I₂₋₁, I₂₋₂, I₂₋₃, et P₂₋₁ , P₂₋₂, P₂₋₃. La troisième méga-rafale MR(n+1) comporte un paquet MIPₙ₊₁ (contenant des données d'information) et des trames vidéo référencées I₃ et P₃. L'encodage de type 1/3 de ces deux trames vidéo I₃ et P₃ produit deux triplets de bits redondants I₃₋₁, I₃₋₂, I₃₋₃, et P₃₋₁, P₃₋₂, P₃₋₃.

Dans cet exemple, on considère que l'entrelacement est de type linéaire et que sa profondeur est égale à 3. Par conséquent, l'équipement de modulation EM intègre les bits redondants I₁₋₁, P₁₋₁ dans la première méga-trame MT(n-1), les bits redondants I₁₋₂, P₁₋₂, I₂₋₁ et P₂₋₁ dans la deuxième méga-trame MT(n) et les bits redondants I₁₋₃, P₁₋₃, I₂₋₂, P₂₋₂, I₃₋₁ et P₃₋₁ dans la troisième méga-trame MT(n+1). Les bits redondants I₂₋₃, P₂₋₃, I₃₋₂ et P₃₋₂ sont intégrés dans une quatrième méga-trame MT(n+2) non représentée, et les bits redondants I₃₋₃ et P₃₋₃ sont intégrés dans une cinquième méga-trame MT(n+3) non représentée.

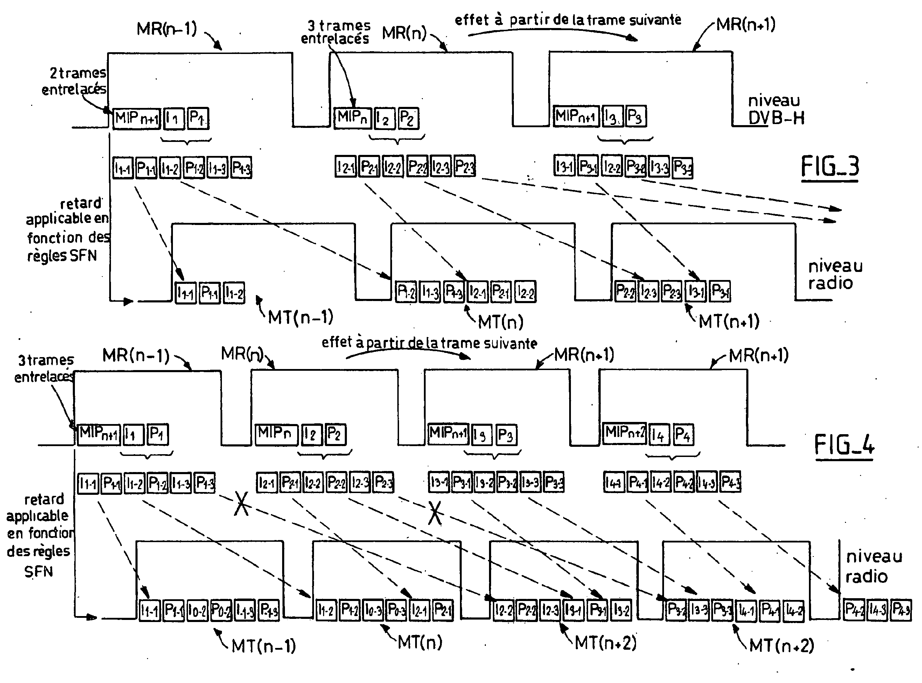

La première durée et/ou la seconde durée des méga-rafales et méga-trames et/ou la profondeur d'entrelacement pouvant varier, l'équipement de modulation EM, et plus précisément son module de traitement MT, doit donc s'adapter à ces variations de sorte que les méga-trames radio demeurent synchronisées sur les méga-rafales. On décrit ci-après plusieurs exemples d'adaptation du fonctionnement de l'équipement de modulation EM, en référence aux figures 3 à 7.

L'exemple illustré sur la figure 3 correspond à une situation dans laquelle l'équipement de modulation EM reçoit dans une méga-rafale courante MR(n) des données d'information (MIPₙ) signalant une augmentation de la profondeur d'entrelacement à la valeur 3, alors qu'elle était précédemment égale à 2 (MIPₙ₋₁) dans la méga-rafale MR(n-1) précédente. Par ailleurs, on considère que l'encodage est de type 1/3 et donc qu'il produit un triplet de bits redondants pour chaque bit de donnée d'une trame vidéo.

Dans ce cas, le module de traitement MT ne peut appliquer le nouveau type d'entrelacement qu'aux bits redondants résultant de l'encodage des bits des méga-rafales MR(n+1), MR(n+2), etc, qui suivent la méga-rafale courante MR(n) et donc qui doivent être intégrés dans les méga-trames radio MT(n+1), MT(n+2), etc, qui suivent la méga-trame radio courante MT(n) qui correspond à la méga-rafale courante MR(n) porteuse de la modification.

Comme on peut le constater, le module de traitement MT intègre bien dans la méga-trame courante MT(n) les bits redondants P₁₋₂, I₁₋₃ et P₁₋₃ issus de l'encodage de bits de la méga-rafale précédente MR(n-1) et les bits redondants I₂₋₁, P₂₋₁ et I₂₋₂ issus de l'encodage de bits de la méga-rafale courante MR(n), tandis qu'il intègre dans la méga-trame suivante MT(n+1) les bits redondants P₂₋₂, I₂₋₃ et P₂₋₃ issus de l'encodage de bits de la méga-rafale courante MR(n) et les bits redondants I₃₋₁ et P₃₋₁ issus de l'encodage de bits de la méga-rafale suivante MR(n+1).

Cette adaptation se fait donc sans problème puisque l'augmentation entraîne une période transitoire où le débit utile est plus faible.

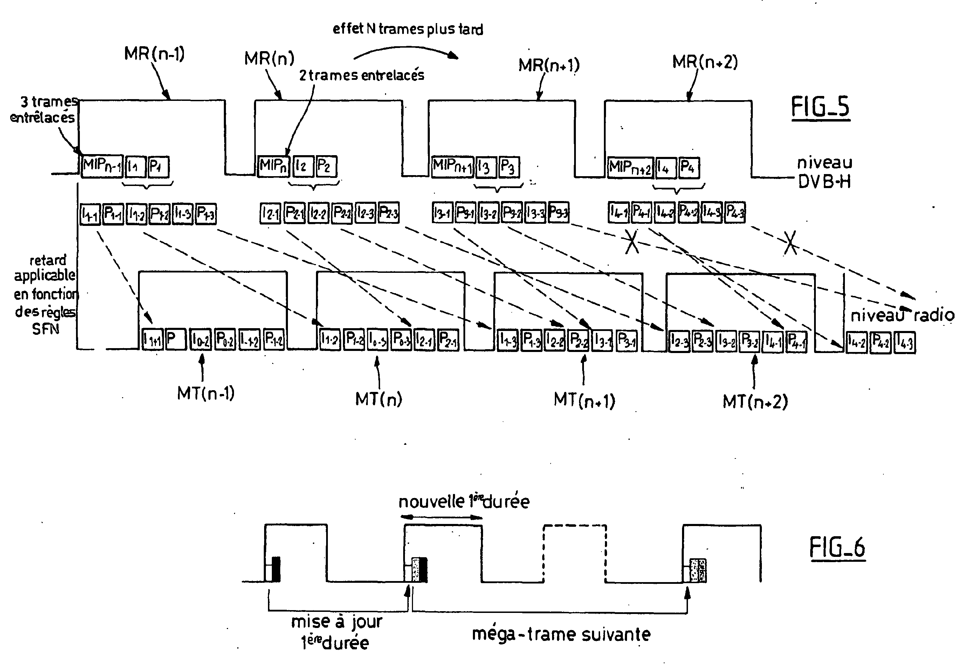

Les exemples illustrés sur les figures 4 et 5 correspondent à une situation dans laquelle l'équipement de modulation EM reçoit dans une méga-rafale courante MR(n) des données d'information (MIPₙ) signalant une diminution de la profondeur d'entrelacement à la valeur 2, alors qu'elle était précédemment égale à 3 (MIPₙ₋₁) dans la méga-rafale MR(n-1) précédente. Par ailleurs, on considère que l'encodage est de type 1/3 et donc qu'il produit un triplet de bits redondants pour chaque bit de donnée d'une trame vidéo.

Dans ce cas, le module de traitement MT ne peut appliquer le nouveau type d'entrelacement qu'aux bits redondants résultant de l'encodage des bits des méga-rafales MR(n+1), MR(n+2), etc, qui suivent la méga-rafale courante MR(n) et donc qui doivent être intégrés dans les méga-trames radio MT(n+1), MT(n+2), etc, qui suivent la méga-trame radio courante MT(n) qui correspond à la méga-rafale courante MR(n) porteuse de la modification.

Cette adaptation se fait avec une réduction temporaire de la qualité puisque le débit demandé est plus fort pendant deux méga-trames. Plusieurs stratégies peuvent être envisagées pour faire face à ce différentiel de débit.

Par exemple, on peut supprimer les queues de l'entrelacement précédent comme illustré sur la figure 4.

Dans ce cas, le module de traitement MT, d'une première part, intègre dans la méga-trame courante MT(n) les bits redondants I₁₋₂ et P₁₋₂ issus de l'encodage de bits de la méga-rafale précédente MR(n-1), les bits redondants I₀₋₃ et P₀₋₃ issus de l'encodage de bits d'une méga-rafale antérieure MR(n-2) et les bits redondants I₂₋₁ et P₂₋₁ issus de l'encodage de bits de la méga-rafale courante MR(n), d'une deuxième part, intègre dans la méga-trame suivante MT(n+1) les bits redondants I₂₋₂, P₂₋₃ et I₂₋₃ issus de l'encodage de bits de la méga-rafale courante MR(n) et les bits redondants I₃₋₁ , P₃₋₁ et I₃₋₂ issus de l'encodage de bits de la méga-rafale suivante MR(n+1), et d'une troisième part, intègre dans la méga-trame suivante MT(n+2) les bits redondants P₃₋₂, I₃₋₃ et P₃₋₃ issus de l'encodage de bits de la méga-rafale courante MR(n+1) et les bits redondants I₄₋₁, P₄₋₁ et I₄₋₂ issus de l'encodage de bits de la méga-rafale suivante MR(n+2). Ensuite la situation est stabilisée.

L'inconvénient de cette stratégie réside dans le fait que certains blocs de bits ne se terminent pas normalement ce qui peut poser problème dans le cas d'un profil d'entrelacement de type « tardif ». Mais, elle présente l'avantage de permettre l'application de la modification dès la méga-trame MR(n+1) qui suit la méga-trame courante MR(n).

Une autre stratégie, illustrée sur la figure 5, consiste à laisser se finir les entrelacements précédents en supprimant les queues d'entrelacements suivants.

Dans ce cas, le module de traitement MT, d'une première part, intègre dans la méga-trame courante MT(n) les bits redondants I₁₋₂ et P₁₋₂ issus de l'encodage de bits de la méga-rafale précédente MR(n-1), les bits redondants I₀₋₃ et P₀₋₃ issus de l'encodage de bits d'une méga-rafale antérieure MR(n-2) et les bits redondants I₂₋₁ et P₂₋₁ issus de l'encodage de bits de la méga-rafale courante MR(n), d'une deuxième part, intègre dans la méga-trame suivante MT(n+1) les bits redondants I₁₋₃ et P₁₋₃ issus de l'encodage de bits de la méga-rafale précédente MR(n-1), les bits redondants I₂₋₂ et P₂₋₂ issus de l'encodage de bits de la méga-rafale courante MR(n) et les bits redondants I₃₋₁ et P₃₋₁ issus de l'encodage de bits de la méga-rafale suivante MR(n+1), d'une troisième part, intègre dans la méga-trame suivante MT(n+2) les bits redondants I₂₋₃ et P₂₋₃ issus de l'encodage de bits de la méga-rafale courante MR(n), les bits redondants I₃₋₂ et P₃₋₂ issus de l'encodage de bits d'une méga-rafale suivante MR(n+1) et les bits redondants I₄₋₁ et P₄₋₁ issus de l'encodage de bits de la méga-rafale suivante MR(n+2), d'une quatrième part, intègre dans la méga-trame suivante MT(n+3) les bits redondants I₄₋₂, P₄₋₂ et I₄₋₃ issus de l'encodage de bits de la méga-rafale suivante MR(n+2).

L'avantage de cette stratégie réside dans le fait que les anciens blocs de bits se terminent normalement ce qui est un avantage dans le cas d'un profil d'entrelacement de type « tardif ». Mais, elle présente l'inconvénient d'entraîner une réduction de la qualité des nouveaux blocs de bits, et surtout du premier (I₃, P₃) qui a une qualité réduite de 1/3 (le suivant (I₄, P₄) a déjà une qualité meilleure), ce qui peut être rédhibitoire dans le cas d'un profil d'entrelacement de type « en avance ». La modification n'est donc entièrement effective pour tous les contenus des méga-rafales qui sont encodés et entrelacés qu'une fois qu'un nombre de méga-trames radio égal à la valeur de l'ancienne profondeur d'entrelacement a été généré, à compter de la méga-trame radio courante (qui correspond à la méga-rafale courante).

L'exemple illustré sur la figure 6 correspond à une situation dans laquelle l'équipement de modulation EM reçoit dans une méga-rafale courante MR(n) des données d'information (MIPₙ) signalant une augmentation de la (première) durée des méga-rafales, par exemple de 100 ms à 200 ms, lors de la prochaine méga-rafale MR(n+1). Une telle modification entraîne également une augmentation de l'intervalle temporel entre deux méga-trames (ou seconde durée).

Dans ce cas, le module de traitement MT utilise la nouvelle première durée pour les méga-trames radio qui seront générées après la méga-trame radio courante MT(n), qui correspond à la méga-rafale courante MR(n).

Deux cas peuvent alors se présenter. Si un terminal Ti reçoit correctement dans une méga-trame courante les données encodées d'une première partie de la méga-rafale courante, il peut donc lire la signalisation de niveau MPE qui lui indique maintenant un délai d'attente doublé. Le terminal Ti va alors attendre une durée double. Comme le sous-module d'entrelacement, du module de traitement MT de l'équipement de modulation EM, a mis en oeuvre immédiatement cette durée double, le terminal Ti trouve effectivement la méga-trame suivante à l'instant correspondant à la durée indiquée par la signalisation MPE. Si ce n'était pas le cas, le sous-module d'entrelacement aurait conservé la valeur simple et le terminal Ti aurait sauté une méga-trame intermédiaire.

A l'inverse, si le terminal Ti n'a pas reçu correctement dans une méga-trame courante les données encodées d'une première partie de la méga-rafale courante, alors il attend encore pendant l'ancienne première durée. Comme le sous-module d'entrelacement a déjà acté la nouvelle (première) durée d'entrelacement, le terminal Ti va se retrouver sur une autre méga-trame qui n'a rien à voir avec la sienne et qu'il considère comme fausse. Il doit donc attendre encore une nouvelle ancienne première période avant de retrouver la trace de sa méga-trame.

On peut également se retrouver dans une situation dans laquelle l'équipement de modulation EM reçoit dans une méga-rafale courante MR(n) des données d'information (MIPₙ) signalant une diminution de la (première) durée des méga-rafales, par exemple de 200 ms à 100 ms, lors de la prochaine méga-rafale MR(n+1). Une telle modification entraîne également une réduction de l'intervalle temporel entre deux méga-trames (ou seconde durée).

Dans ce cas, le module de traitement MT utilise la nouvelle première durée pour les méga-trames radio qui seront générées après un nombre de méga-trames radio égal à la valeur de la profondeur d'entrelacement courante, y compris la méga-trame radio courante (qui correspond à la méga-rafale courante).

Deux cas peuvent alors se présenter. Si un terminal Ti reçoit correctement dans une méga-trame courante les données encodées d'une première partie de la méga-rafale courante, il peut alors apprendre au niveau MPE que la méga-trame suivante se trouve à un intervalle de temps réduit de moitié. Le terminal Ti va donc attendre cette nouvelle (première) durée et tomber sur une méga-trame qui n'a rien à voir avec lui puisque le sous-module d'entrelacement n'a pas encore acté le changement de durée. Il va donc considérer que la méga-trame est fausse. Il va ensuite, de façon normale, attendre la méga-trame suivante et se retrouver dans sa méga-trame envoyée par l'équipement de modulation EM, puis il va la décoder.

Si le terminal Ti n'a pas reçu correctement dans une méga-trame courante les données encodées d'une première partie de la méga-rafale courante, alors il attend encore pendant l'ancienne première durée. Comme le sous-module d'entrelacement n'a pas encore acté le changement de durée de trame, le terminal Ti va se retrouver sur la méga-trame suivante. Le fait que l'équipement de modulation EM n'ait pas acté immédiatement la nouvelle durée permet donc à ce terminal Ti de ne pas perdre une méga-trame utile.

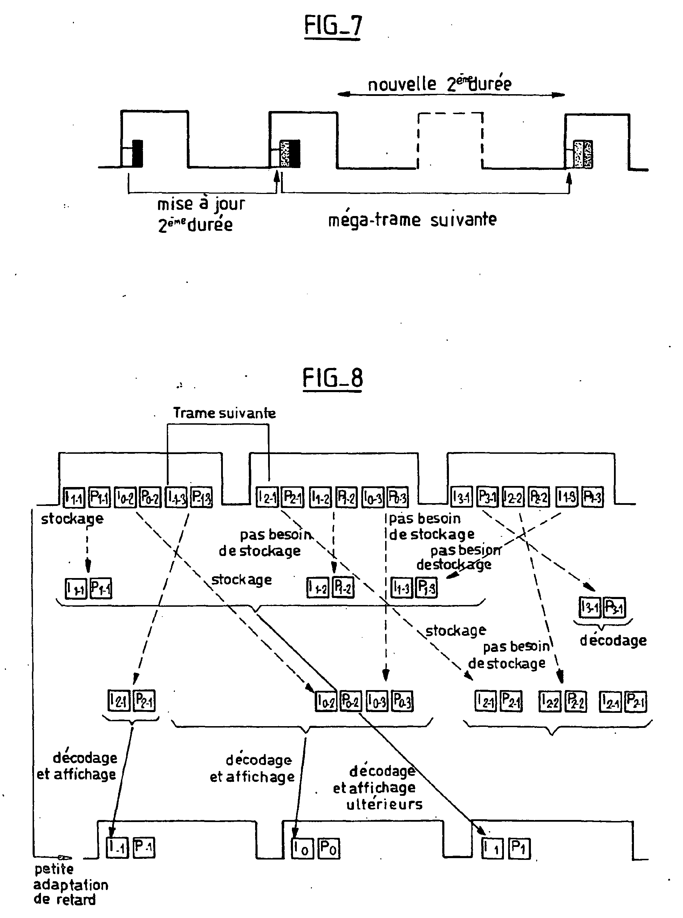

L'exemple illustré sur la figure 7 correspond à une situation dans laquelle l'équipement de modulation EM reçoit dans une méga-rafale courante MR(n) des données d'information (MIPₙ) signalant une augmentation de la (seconde) durée des méga-rafales lors de la prochaine méga-rafale MR(n+1).

Dans ce cas, le module de traitement MT utilise la nouvelle seconde durée pour les méga-trames radio qui seront générées après la méga-trame radio courante MT(n), qui correspond à la méga-rafale courante MR(n).

Deux cas peuvent alors se présenter. Si un terminal Ti reçoit correctement dans une méga-trame courante les données encodées d'une première partie de la méga-rafale courante, il peut lire la signalisation de niveau MPE qui lui indique que l'intervalle temporel est, par exemple, doublé. Alors, le terminal Ti va attendre une durée double. Le fait de mettre en oeuvre immédiatement la nouvelle valeur de la seconde durée permet d'éviter au terminal Ti de se retrouver sur sa méga-trame sans sauter une méga-trame intermédiaire, ce qui serait le cas avec l'ancienne seconde durée (plus courte). Dans le cas où le terminal Ti n'a pas reçu correctement dans une méga-trame courante les données encodées d'une première partie de la méga-rafale courante, alors il attend encore pendant l'ancienne seconde durée. Comme le sous-module d'entrelacement n'a pas acté la nouvelle durée, le terminal Ti va se retrouver sur une méga-trame qui n'a rien avoir avec la sienne et qui se trouve à mi-chemin de sa méga-trame suivante. Le terminal Ti considère alors cette mega-trame comme fausse et doit donc attendre encore une nouvelle ancienne seconde période avant de retrouver la trace de sa méga-trame.

On peut également se retrouver dans situation dans laquelle l'équipement de modulation EM reçoit dans une méga-rafale courante MR(n) des données d'information (MIPₙ) signalant une diminution de la (seconde) durée entre méga-rafales lors de la prochaine méga-rafale MR(n+1).

Dans ce cas, le module de traitement MT utilise la nouvelle seconde durée pour les méga-trames radio qui seront générées après un nombre de méga-trames radio égal à la valeur de la profondeur d'entrelacement courante, y compris la méga-trame radio courante (qui correspond à la méga-rafale courante).

Deux cas peuvent alors se présenter. Si un terminal Ti reçoit correctement dans une méga-trame courante les données encodées d'une première partie de la méga-rafale courante, il peut donc lire la signalisation de niveau MPE qui lui indique que la mega-trame suivante doit arriver dans un intervalle de temps plus réduit. Comme l'équipement de modulation EM n'a pas encore acté ce changement, le terminal Ti va donc se retrouver sur une méga-trame qui n'a rien à voir avec sa propre méga-trame et va considérer cette méga-trame comme fausse. Il va donc à nouveau attendre l'ancienne durée, ce qui l'amènera sur la méga-trame suivante, et lui permettra alors de la décoder.

Si le terminal Ti n'a pas reçu correctement dans une méga-trame courante les données encodées d'une première partie de la méga-rafale courante, alors il attend encore pendant l'ancienne seconde durée. Si le sous-module d'entrelacement avait acté immédiatement la réduction de l'intervalle temporel (seconde durée), le terminal Ti aurait donc manqué la méga-trame suivante, ce qui n'est pas le cas. Le fait d'attendre pendant la profondeur d'entrelacement permet d'éviter de sauter une méga-trame.

Afin que le mécanisme de changement de seconde durée puisse fonctionner, il est préférable que les différentes secondes durées soient des multiples d'une valeur de base choisie. De plus, il est alors préférable que toutes les méga-rafales et donc toutes les méga-trames aient la même seconde durée. La mise en oeuvre d'une technique de décimation peut permettre d'atteindre des valeurs de seconde durée plus variables (c'est-à-dire que si l'on a un débit de référence égal à 300 kbps, on peut facilement obtenir des débits égaux à 150, 100 ou 75 kbps, par exemple. La valeur de base choisie dépend de la seconde durée de la méga-rafale de base qui peut elle-même être modifiée.

D'autres modifications peuvent être prises en compte. Ainsi, on peut envisager, par exemple, que les utilisateurs des terminaux Ti et le service de diffusion de contenus changent en même temps. Dans ce cas, on peut montrer que la modification peut être signalée (par exemple dans un paquet MIP) par des données d'information définissant au moins dans combien de méga-rafales sera effective la modification, la durée de la méga-rafale au moment où la modification est effective et l'intervalle temporel entre les méga-rafales (seconde durée) au moment où la modification est effective.

On notera que le module de traitement MT peut être également chargé d'intégrer dans certaines au moins des méga-trames certaines au moins des données d'information qui sont contenues dans les méga-rafales correspondantes reçues. Ces données d'informations qui sont transmises aux terminaux Ti sur l'interface air peuvent ainsi être utilisées par ces derniers afin de s'adapter plus rapidement à une modification de service (modification de première durée et/ou de seconde durée et/ou de profil de codage et/ou de profil d'entrelacement).

Le module de traitement MT de l'équipement de modulation ME peut être réalisé sous la forme de modules logiciels (ou informatiques), de circuits électroniques, ou d'une combinaison de circuits et de logiciels.

On se réfère maintenant plus précisément aux figures 1, 8 et 9 pour décrire les opérations effectuées par les terminaux de communication Ti pour reconstituer les données des paquets IP initiaux, transmises dans les méga-trames radio.

Chaque terminal de communication Ti (ici un téléphone mobile) comprend un récepteur de données (ici des contenus multimédia) RC comportent par exemple un module de réception MR chargé de reconstituer chaque contenu diffusé au moyen des paquets IP encodés et encapsulés dans les méga-rafales radio successivement reçues. Comme cela est illustré, les récepteurs de contenus RC peuvent également comporter un module de stockage MS (par exemple une mémoire) chargé de stocker au moins temporairement les bits de données contenus dans plusieurs méga-trames consécutives.

Le module de réception comprend des moyens de stockage de méga-trames radio, des moyens de désentrelacement, des moyens de décodage chargés de récupérer les paquets (ici MPEG2) et des moyens d'assemblage chargés, en cas de décodage correct au bout de la Nième méga-trame reçue (le nombre N de méga-trames dépendant des conditions de réception), d'assembler les paquets (ici MPEG2) en un paquet MPE transportant un paquet IP, utilisé par une application classique (par exemple multimédia), et une information de signalisation, contenue dans son entête MPE, qui est alors (classiquement) utilisée par des moyens de traitement de trame (ici DVB-H).

Au démarrage, le module de réception MR du terminal Ti reçoit des données en continu afin d'acquérir des informations de service. Lorsque l'on demande au terminal Ti de décoder un service donné, il va se caler sur un identifiant de paquets ou PID (pour « Packet IDentifier ») qui correspond au service donné et commencer à décoder les contenus des méga-trames correspondantes. Le module de réception MR extrait de la méga-trame courante ses informations de MPE et donc la seconde durée (intervalle temporel entre deux méga-trames).

Si le terminal Ti se réveille 100 ms avant la méga-trame suivante, il peut acquérir les données contenues dans cette méga-trame (courante) et essayer de les décoder. Si les conditions de réception sont bonnes, il peut effectuer le décodage, sinon il doit attendre la méga-trame suivante afin de compléter la FEC. Une fois que la FEC reçue est suffisante, le terminal Ti peut donc utiliser les informations de MPE pour positionner efficacement son mécanisme d'économie d'énergie de batterie. L'utilisation de la FEC au niveau de la couche radio permet d'obtenir de meilleures performances.

On va maintenant décrire le cas où les conditions de réception sont bonnes, en référence à la figure 8.

Dans ce cas, le terminal Ti reçoit dans de bonnes conditions, dès le démarrage d'un service de diffusion de contenus, les méga-trames diffusées par le satellite du réseau de diffusion RD. Son module de réception MR est alors capable de décoder correctement les bits de données contenus dans la première méga-trame reçue, afin de les transmettre au lecteur de contenus LC. Ce dernier peut alors immédiatement afficher les données décodées. La durée de mise en route est donc sensiblement la même que la durée d'une rafale DVB-H.

On notera que la première méga-trame permet au module de réception MR, après décodage MPE, de déterminer le début de la méga-trame suivante.

Par ailleurs, on notera que la forte redondance des informations contenues dans des méga-trames successives permet au module de réception MR de décoder l'équivalent de 3 méga-trames à partir de la méga-trame courante. Par conséquent, le module de réception MR a en quelque sorte deux méga-trames d'avance sur la méga-trame courante, et conserve cette avance sur les méga-trames suivantes, tant que la réception demeure bonne. Il dispose donc d'une marge de deux méga-trames en cas de mauvaise réception.

Si l'on fait l'hypothèse que l'encodage est de type 1/3, le terminal Ti doit être capable de stocker les données contenues dans trois méga-trames successives (entrelacement glissant) de 200 ms chacune, soit un équivalent de 600 ms de stockage. Dans ce cas, le module de stockage MS du terminal Ti doit disposer d'une capacité de stockage d'au moins 40 Mbits. A cet effet, on peut par exemple utiliser une mémoire de type DRAM (éventuellement en dehors du « chipset »).

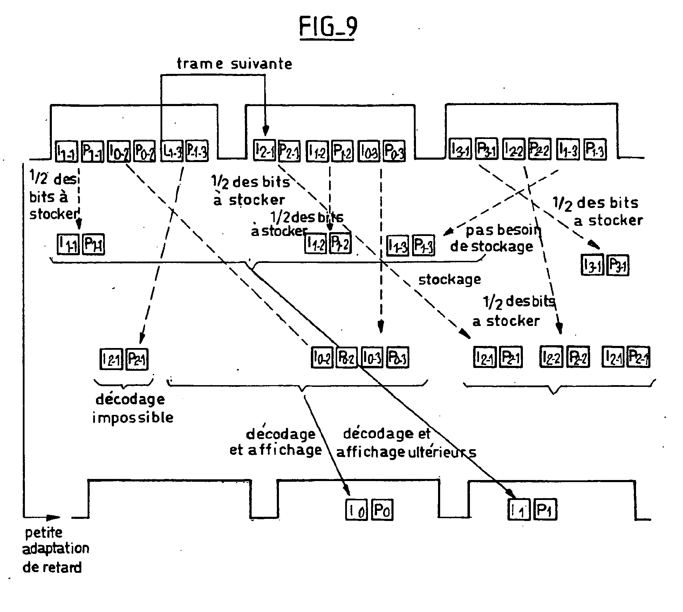

On va maintenant décrire le cas où les conditions de réception sont mauvaises, en référence à la figure 9.

Dans ce cas, le terminal Ti reçoit dans de mauvaises conditions, dès le démarrage d'un service de diffusion de contenus, les méga-trames diffusées par le satellite du réseau de diffusion RD.

Si le module de réception MR ne reçoit aucune donnée avant de recevoir une méga-trame complète (cas d'occultation totale) alors il présente un comportement équivalent à celui que présente un terminal classique lorsqu'il reçoit des trames DVB-H.

Si le module de réception MR reçoit des donnés de façon épisodique (cas d'un passage derrière des arbres ou des rangées de murs), alors il peut décoder un certain nombre de bits sur plusieurs méga-trames successives et donc fournir un minimum de données au lecteur de contenus LC pour qu'il puisse démarrer l'affichage. En théorie, il faut décoder des bits sur au moins deux méga-trames successives. Par exemple, s'il reçoit dans chaque méga-trame l'équivalent d'une demie (1/2) méga-trame, il va pouvoir fournir suffisamment de données au lecteur de contenus LC pour qu'il affiche le service correspondant à partir de la seconde méga-trame, alors qu'en présence de simples trames DVB-H aucun service ne peut être affiché tant que persiste l'évanouissement. En outre, le terminal Ti peut commencer à mettre en oeuvre son mécanisme d'économie d'énergie de la batterie. Puis, dès la seconde méga-trame, le module de réception MR va avoir de nouveau une méga-trame d'avance qu'il va maintenir pendant les méga-trames suivantes.

On notera que l'invention permet un « zapping » dont la durée est au moins inférieure ou égale à celle habituelle dans le cas du DVB-H, du fait de la mise en oeuvre du mécanisme d'accès d'un terminal à un service, du type de celui décrit ci-avant en référence aux figures 1, 8 et 9.

L'invention ne se limite pas aux modes de réalisation d'équipement d'encapsulation EE, d'équipement de modulation EM et de terminal de communication Ti décrits ci-avant, seulement à titre d'exemple, mais elle englobe toutes les variantes que pourra envisager l'homme de l'art dans le cadre des revendications ci-après.

## Revendications

1. Equipement (EE) d'encapsulation de paquets IP de données à transmettre en mode TDMA via un réseau de communication (RD), l'équipement d'encapsulation comprend des moyens d'encapsulation IP (ME) agencés pour encapsuler des paquets IP reçus, appartenant à un même flux, dans des « méga-rafales » de paquets successives, chaque méga-rafale étant constituée d'un ensemble de rafales successives, constituées chacune d'un ensemble de paquets successifs, et les méga-rafales présentant une première durée choisie, **caractérisé en ce que** lesdites méga-rafales étant séparées temporellement les unes des autres d'une seconde durée choisie, et pour adjoindre à chaque méga-rafate des données d'information représentatives au moins de ladite première durée, de ladite seconde durée, d'un type d'encodage à appliquer et d'un type d'entrelacement à effectuer.

2. Equipement d'encapsulation IP selon la revendication 1, **caractérisé en ce que** lesdits moyens d'encapsulation IP (ME) sont agencés pour adjoindre à chaque méga-rafale un entête d'information se présentant sous la forme d'un paquet de type « Megaframe Information Packet » (MIP); et contenant lesdites données d'information dans des structures privées.

3. Equipement d'encapsulation IP selon l'une des revendications 1 et 2, **caractérise en ce que** lesdits moyens d'encapsulation IP (ME) sont agencés chaque fois que le nombre de données constituant les paquets IP et les données d'information associées contenus dans une méga-rafalé est inférieur au nombre maximal de données qu'elle peut contenir, pour compléter le contenu de ladite méga-rafale avec des données de bourrage non signifiantes de sorte que ledit contenu soit constitué d'un nombre de données égal audit nombre maximal.

4. Equipement de modulation (EM) pour un réseau de communication (RD) propre à transmettre en mode continu des données modulées pour une transmission radio, l'équipement de modulation comprend des moyens de traitement (MT)agencés pour extraire de chaque méga-rafale, générée par un équipement d'encapsulation IP (EE) selon l'une des revendications 1 à 3 et la méga-rafale constituée d'un ensemble de rafales successives, constituées chacune d'un ensemble de paquets successifs, et la méga-rafale présentant une première durée choisie, les données d'information qu'elle contient, et pour encoder, selon le type d'encodage défini dans des données d'information précédemment extraites, les données contenues dans les paquets de la méga-rafalé correspondante, et pour entrelacer, selon le type d'entrelacement défini par lesdites données d'information précédemment extraites, les données redondantes résultant dudit encodage dans des méga-trames radio successives présentant une première durée identique à celle définie par lesdites données d'information précédemment extraites et séparées temporellement d'une seconde durée identique à celle définie par lesdites données d'information précédemment extraites.

5. Equipement de modulation selon la revendication 4, **caractérise en ce que** lesdits moyens de traitement (MT) sont agencés, à réception d'une méga-rafale, pour déterminer les dates d'arrivée et/ou de fin de cette méga-rafale de manière à déduire de ces dates et de ladite seconde durée définie dans les dernières données, d'informations extraites la date d'arrivée de la méga-rafate suivante.

6. Equipement de modulation selon l'une des revendications 4 et 5, **caractérisé en ce que** lesdits moyens de traitement (MT) sont agencés, en cas d'extraction dé la méga-rafalé courante de données d'information représentatives d'un nouveau type d'entrelacement correspondant à une profondeur d'entrelacement différente de celle définie par de précédentes données d'information extraites, pour appliquer ledit nouveau type d'entrelacement aux données redondantes devant être intégrées dans les méga-trames radio qui suivent la méga-trarné radio courante correspondant à ladite mega-rafale courante.

7. Equipement de modulation selon l'une des revendications 4 à 6, **caractérisé en ce que** lesdits moyens de traitement (MT) sont agencés, en cas d'extraction de la méga-rafale courante de données d'information représentatives d'une nouvelle seconde durée inférieure à celle définie par de précédentes données d'information extraites, pour utiliser ladite nouvelle seconde durée pour les méga-trames radio qui seront générées après qu'aient été générées des méga-tramés radio, y compris celle courante correspondant à ladite mèga-rafale courante, en nombre égal à un nombre défini par le type d'entrelacement défini par de précédentes données d'information extraites.

8. Equipement de modulation selon l'une des revendications 4 à 7, **caractérisé en ce que** lesdits moyens de traitement (MT) sont agencés, en cas d'extraction de la méga-rafale courante de données d'information représentatives d'une nouvelle seconde durée supérieure à celle définie par de précédentes données d'information extraites, pour utiliser ladite nouvelle seconde durée pour les méga-trames radio qui seront générées après la méga-trame radio courante qui correspond à ladite méga-rafale courante.

9. Equipement de modulation selon l'une des revendications 4 à 8, **caractérisé en ce que** lesdits moyens de traitement (MT) sont agencés, en cas d'extraction de la méga-rafale courante de données d'information représentatives d'une nouvelle première durée supérieure à celle définie par de précédentes données d'information extraites, pour utiliser ladite nouvelle première durée pour les méga-trames radio qui seront générées après la méga-trame radio courante qui correspond à ladite méga-rafale courante,

10. Equipement de modulation selon l'une des revendications 4 à 9, **caractérisé en ce que** lesdits moyens de traitement (MT) sont agencés, en cas d'extraction de la méga-rafale courante de données d'information représentatives d'une nouvelle première durée inférieure à celle définie par due précédentes données d'information extraites, pour utiliser ladite nouvelle première durée pour les méga-trames radio qui seront générées après qu'aient été générées des méga-trames radio, y compris celle courante correspondant à ladite méga-rafale courante, en nombre égal à un nombre défini par le type d'entrelacement défini par de précédentes données d'information extraites.

11. Equipement de modulation selon l'une des revendications 4 à 10, **caractérisé en ce que** lesdits moyens de traitement (MT) sont agencés pour intégrer dans certaines au moins desdites méga-trames certaines au moins desdites données d'information contenues dans lesdites méga-rafales correspondances reçues.

12. Terminal de communication (Ti) propre à se connecter à un réseau de communication (RD) capable de transmettre en mode continu des paquets regroupent des paquets IP organisés en mode TDMA dans des méga-trames radio générées par un équipement de modulation (EM) selon l'une des revendications 4 à 11, le terminal de communication comprend des moyens de stockage de méga-trames radio, des moyens de désentrelacement, des moyens de décodage chargés de récupérer les paquets, et des moyens d'assemblage chargés, en cas de décodage correct au bout d'une Nième méga-trame reçue. N étant fonction des conditions de réception, d'assembler les paquets en un paquet de type «MultiProtocol Encapsulation » (MPE) transportant un paquet IP, utilisé par une application, et une information de signalisation, contenue dans un entête dudit paquet MPE, et des moyens de traitement de trame agencés pour utiliser lesdites information de signalisation pour traiter lesdits paquets IP.

## Claims

1. IP packet encapsulation equipment (EE) to be sent in TDMA mode via a communication network (RD), the encapsulation equipment includes IP encapsulation means (ME) configured to encapsulate IP packets received, belonging to the same flow in "mega-bursts" of successive packets, each mega-burst consisting of a set of successive bursts, each consisting of a set of successive packets, and the mega-bursts having a first chosen duration, **characterized in that** said mega-bursts are temporally separated from each other by a second chosen duration, and to attach to each mega-burst information data representing at least said first duration, said second duration, a type of encoding to be applied, and a type of interleaving to be carried out.

2. IP encapsulation equipment according to claim 1, **characterized in that** said IP encapsulation means (ME) are configured to attach to each mega-burst an information header taking the form of a "Megaframe Information Packet" (MIP) and containing said information data in private structures.

3. IP encapsulation equipment according to one of claims 1 and 2, **characterized in that** said IP encapsulation means (ME) are configured, each time that the number of data items making up the IP packets and the associated information data contained in a mega-burst is less than the maximum number of data items that it may contain, to complete the content of said mega-burst with insignificant filler data so that said content consists of a number of data items equal to said maximum number.

4. Modulation equipment (EM) for a communication network (RD) able to send in continuous mode modulated data for a radio transmission, the modulation equipment includes processing means (MT) configured to extract from each mega-burst, generated by IP encapsulation equipment (EE) according to one of claims 1 to 3 and the mega-burst consisting of a set of successive bursts, each consisting of a set of successive packets, and the mega-bursts with a first chosen duration, the information data it contains and, for encoding, depending on the type of encoding defined in previously-extracted information data, the data contained in the packets of the corresponding mega-burst, and for interleaving, depending on the type of interleaving defined by said previously-extracted information data, the redundant data resulting from said encoding in successive radio mega-frames with a first duration identical to the one defined by said previously-extracted information data and temporally separated by a second duration identical to the one defined by said previously-extracted information data.

5. Modulation equipment according to claim 4, **characterized in that** said processing means (MT) are configured, on reception of a mega-burst, to determine the arrival and/or end dates of this mega-burst so as to deduce, from these dates and said second duration defined in the last information data extracted, the arrival date of the next mega-burst.

6. Modulation equipment according to one of claims 4 and 5, **characterized in that** said processing means (MT) are configured, in the event of extraction from the current mega-burst of information data representing a new type of interleaving corresponding to a depth of interleaving different to the one defined by previous extracted information data, to apply said new type of interleaving to the redundant data which is to be integrated into the radio mega-frames which follow the current radio mega-frame corresponding to said current mega-burst.

7. Modulation equipment according to one of claims 4 to 6, **characterized in that** said processing means (MT) are configured, in the event of extraction from the current mega-burst of information data representing a new second duration shorter than the one defined by previous extracted information data, to use said new second duration for the radio mega-frames which will be generated after radio mega-frames have been generated, including the current one corresponding to said current mega-burst, equal to a number defined by the type of interleaving defined by previous extracted information data.

8. Modulation equipment according to one of claims 4 to 7, **characterized in that** said processing means (MT) are configured, in the event of extraction from the current mega-burst of information data representing a new second duration greater than the one defined by previous extracted information data, to use said new second duration for the radio mega-frames which will be generated after the current radio mega-frame which corresponds to said current mega-burst.

9. Modulation equipment according to one of claims 4 to 8, **characterized in that** said processing means (MT) are configured, in the event of extraction from the current mega-burst of information data representing a new first duration greater than the one defined by previous extracted information data, to use said new first duration for the radio mega-frames which will be generated after the current radio mega-frame which corresponds to said current mega-burst.

10. Modulation equipment according to one of claims 4 to 9, **characterized in that** said processing means (MT) are configured, in the event of extraction from the current mega-burst of information data representing a new first duration shorter than the one defined by previous extracted information data, to use said new first duration for the radio mega-frames which will be generated after radio mega-frames have been generated, including the current one corresponding to said current mega-burst, equal to a number defined by the type of interleaving defined by previous extracted information data.

11. Modulation equipment according to one of claims 4 to 10, **characterized in that** said processing means (MT) are configured to integrate into at least some of said mega-frames at least some of said information data contained in said corresponding mega-bursts received.

12. Communication terminal (Ti) able to connect to a communication network (RD) able to send in continuous mode packets grouping IP packets organized in TDMA mode into radio mega-frames generated by modulation equipment (EM) according to one of claims 4 to 11, the communication terminal includes means of storing radio mega-frames, de-interleaving means, decoding means responsible for retrieving the packets, and assembly means responsible, in the event of correct decoding after an N-th mega-frame received, with N depending on the reception conditions, for assembling the packets into a "MultiProtocol Encapsulation" (MPE) type packet carrying an IP packet, used by an application, and signaling information contained in a header of said MPE packet, and frame processing means configured to use said signaling information to process said IP packets.

## Patentansprüche

1. Einkapselungsvorrichtung (EE) für im TDMA-Modus über ein Kommunikationsnetzwerk (RD) zu übertragende IP-Datenpakete, wobei die Einkapselungseinrichtung IP-Einkapselungsmittel (ME) umfasst, welche dazu ausgelegt sind, empfangene IP-Pakete, die einem selben Paketfluss angehören, in "Mega-Bursts" von aufeinanderfolgenden Paketen einzukapseln, wobei jeder Mega-Burst aus einer Reihe von aufeinanderfolgenden Bursts besteht, von denen ein jeder aus einer Reihe von aufeinanderfolgenden Paketen gebildet wird, und wobei die Mega-Bursts eine erste ausgewählte Länge aufweisen, **dadurch gekennzeichnet, dass** die besagten Mega-Bursts zeitlich um eine ausgewählte zweite Dauer voneinander getrennt sind, und jedem Mega-Burst Informationsdaten hinzuzufügen, welche zumindest für die besagte erste Dauer, die besagte zweite Dauer, einen anzuwendenden Codierungstyp und einen auszuführenden Verschachtelungs-Typ repräsentativ sind.

2. IP-Einkapselungsvorrichtung nach Anspruch 1, **dadurch gekennzeichnet, dass** die besagten IP-Einkapselungsmittel (ME) dazu ausgelegt sind, jedem Mega-Burst einen Informationskopfteil hinzuzufügen, welcher die Form eines Pakets vom Typ "Megarahmen-Informationspaket" (MIP) aufweist und die besagten Informationsdaten in privaten Strukturen enthält.

3. IP-Einkapselungsvorrichtung nach einem der Ansprüche 1 und 2, **dadurch gekennzeichnet, dass** die besagten IP-Einkapselungsmittel (ME) dazu ausgelegt sind, jedes Mal, wenn die Anzahl der Daten, welche die IP-Pakete bilden, und die assoziierten Informationsdaten, welche in einem Mega-Burst enthalten sind, niedriger ist als die maximale Anzahl von Daten, den er enthalten kann, den Inhalt des besagten Mega-Bursts mit nicht signifikanten Stopfdaten zu vervollständigen, so dass der besagte Inhalt eine Anzahl von Daten umfasst, welche der maximalen Anzahl entspricht.

4. Modulationsvorrichtung (EM) für ein Kommunikationsnetzwerk (RD), welche dazu geeignet ist, für eine Funkübertragung modulierte Daten kontinuierlich zu übertragen, wobei die Modulationsvorrichtung Verarbeitungsmittel (MT) umfasst, welche dazu ausgelegt sind, aus jedem von einer IP-Einkapselungsvorrichtung (EE) nach einem der Ansprüche 1 bis 3 erzeugten Mega-Burst und aus dem aus einer Reihe von aufeinanderfolgenden Bursts, welche jeweils von einer Reihe von aufeinanderfolgenden Paketen gebildet werden, bestehenden Mega-Burst und dem eine erste ausgewählte Dauer aufweisenden Mega-Burst die darin enthaltenen Informationsdaten zu extrahieren und die in den Paketen des entsprechenden Mega-Bursts enthaltenen Daten gemäß dem in den zuvor extrahierten Informationsdaten definierten Codierungstyp zu codieren, und die redundanten Daten, welche aus der besagten Codierung resultieren, gemäß einem von den besagten zuvor extrahierten Informationsdaten definierten Verschachtelungstyp in aufeinanderfolgenden Mega-Funkrahmen, welche eine erste Dauer aufweisen, die mit der von den besagten zuvor extrahierten Informationsdaten definierten Dauer identisch ist, und zeitlich um eine zweite Dauer, welche mit der von den besagten zuvor extrahierten Informationsdaten definierten Dauer identisch ist, getrennt sind, zu verschachteln.

5. Modulationsvorrichtung nach Anspruch 4, **dadurch gekennzeichnet, dass** die besagten Verarbeitungsmittel (MT) dazu ausgelegt sind, bei Empfang eines Mega-Bursts die Zeiten der Ankunft und/oder des Endes dieses Mega-Bursts zu ermitteln, um von diesen Zeiten und von der besagten in den letzten extrahierten Informationsdaten definierten besagten zweiten Dauer die Zeit der Ankunft des nächsten Mega-Bursts abzuleiten.

6. Modulationsvorrichtung nach einem der Ansprüche 4 und 5, **dadurch gekennzeichnet, dass** die besagten Verarbeitungsmittel (MT) dazu ausgelegt sind, im Fall des Extrahierens von Informationsdaten, welche für einen neuen Verschachtelungstyp, der einer sich von der von vorherigen extrahierten Informationsdaten definierten Verschachtelungstiefe unterscheidenden Verschachtelungstiefe entspricht, repräsentativ sind, den besagten neuen Verschachtelungstyp auf die redundanten Daten anzuwenden, welche in die Mega-Funkrahmen, die auf den aktuellen, dem besagten aktuellen Mega-Burst entsprechenden Mega-Funkrahmen folgen, zu integrieren sind.

7. Modulationsvorrichtung nach einem der Ansprüche 4 bis 6, **dadurch gekennzeichnet, dass** die besagten Verarbeitungsmittel (MT) dazu ausgelegt sind, im Fall des Extrahierens von Informationsdaten, welche für eine neue zweite Dauer, die kürzer ist als die von den zuvor extrahierten Informationsdaten definierte Dauer, repräsentativ sind, aus dem aktuellen Mega-Burst, die besagte neue zweite Dauer für Mega-Funkrahmen, die erzeugt werden, nachdem Mega-Funkrahmen, einschließlich des aktuellen Rahmens, welcher dem besagten aktuellen Mega-Burst entsprechen, erzeugt worden sind, in einer Anzahl, welche der durch den von den vorherigen extrahierten Daten definierten Verschachtelungs-Typ definierten Anzahl entspricht, zu verwenden.

8. Modulationsvorrichtung nach einem der Ansprüche 4 bis 7, **dadurch gekennzeichnet, dass** die besagten Verarbeitungsmittel (MT) dazu ausgelegt sind, im Fall des Extrahierens von Informationsdaten, welche für eine neue zweite Dauer, die länger ist als die von den zuvor extrahierten Informationsdaten definierte Dauer, repräsentativ sind, aus dem aktuellen Mega-Burst, die besagte neue zweite Dauer für die Mega-Funkrahmen, die nach dem aktuellen Mega-Funkrahmen, welcher dem besagten aktuellen Mega-Burst entspricht, erzeugt werden, zu verwenden.

9. Modulationsvorrichtung nach einem der Ansprüche 4 bis 8, **dadurch gekennzeichnet, dass** die besagten Verarbeitungsmittel (MT) dazu ausgelegt sind, im Fall des Extrahierens von Informationsdaten, welche für eine neue erste Dauer, die länger ist als die von den vorherig extrahierten Informationsdaten definierte Dauer, repräsentativ sind, aus dem aktuellen Mega-Burst, die besagte neue erste Dauer für die Mega-Funkrahmen, die nach dem aktuellen Mega-Funkrahmen, welcher dem besagten aktuellen Mega-Burst entspricht, erzeugt werden, zu verwenden.

10. Modulationsvorrichtung nach einem der Ansprüche 4 bis 9, **dadurch gekennzeichnet, dass** die besagten Verarbeitungsmittel (MT) dazu ausgelegt sind, im Fall des Extrahierens von Informationsdaten, welche für eine neue erste Dauer, die kürzer ist als die von den zuvor extrahierten Informationsdaten definierte Dauer, repräsentativ sind, aus dem aktuellen Mega-Burst, die besagte neue erste Dauer für die Mega-Funkrahmen, die erzeugt werden, nachdem Mega-Funkrahmen, einschließlich des aktuellen Rahmens, welcher dem besagten aktuellen Mega-Burst entspricht, erzeugt worden sind, in einer Anzahl, welche der durch den von zuvor extrahierten Daten definierten Verschachtelungs-Typ definierten Anzahl entspricht, zu verwenden.

11. Modulationsvorrichtung nach einem der Ansprüche 4 bis 10, **dadurch gekennzeichnet, dass** die besagten Verarbeitungsmittel (MT) dazu ausgelegt sind, zumindest bestimmte der in den besagten entsprechenden empfangenen Mega-Bursts enthaltene Informationsdaten in zumindest bestimmte der besagten Mega-Rahmen zu integrieren.

12. Kommunikationsendgerät (Ti) für den Anschluss an ein Kommunikationsnetzwerk (RD), dazu ausgelegt, Pakete, welche im TDMA-Modus organisierte IP-Pakete gruppieren, in von einer Modulationsvorrichtung (EM) nach einem der Ansprüche 4 bis 11 erzeugten Mega-Funkrahmen kontinuierlich zu übertragen, wobei das Kommunikationsendgerät Mittel zum Speichern von Mega-Funkrahmen, Mittel zum Entschachteln, Mittel zum Decodieren, deren Aufgabe es ist, die Pakete zurückzugewinnen, und Mittel zum Zusammenfügen, deren Aufgabe es ist, im Fall des korrekten Dekodierens nach einem x-ten empfangenen Mega-Rahmen, wobei N eine Funktion der Empfangsbedingungen ist, die Pakete in ein Paket vom Typ "Mehrfachprotokoll-Einkapselung" (MPE), welches ein von einer Anwendung verwendetes IP-Paket und eine Signalisierungsinformation, welche in einem Kopfteil des besagten MPE-Pakets enthalten ist, transportiert, zusammenzufügen, und Mittel zum Verarbeiten von Rahmen, welche dazu ausgelegt sind, die besagten Signalisierungsinformationen für die Verarbeitung der besagten IP-Pakete zu verwenden, umfasst.
